Europäisches Patentamt

European Patent Office

Office européen des brevets

(11) Publication number:. **0 185 515**
**A1**

(12) **EUROPEAN PATENT APPLICATION**

(21) Application number: **85309040.5**

(22) Date of filing: **12.12.85**

(51) Int. Cl.⁴: **F 01 D 25/16**
**F 16 C 17/18**

(30) Priority: **14.12.84 US 682041**

(43) Date of publication of application:
**25.06.86 Bulletin 86/26**

(84) Designated Contracting States:
**DE FR GB IT SE**

(71) Applicant: **THE GARRETT CORPORATION**
**9851-9951 Sepulveda Boulevard P.O. Box 92248**
**Los Angeles, California 90009(US)**

(72) Inventor: **Laham, Herman C.**
**2631 West 232nd Street**
**Torrance California(US)**

(74) Representative: **Rees, David Christopher et al,**
**Kilburn & Strode 30 John Street**
**London WC1N 2DD(GB)**

(54) **Rotor shaft assembly for a turbocharger and method of assembly.**

(57) A rotor-shaft assembly including a bearing system (36) to be used in a turbocharger. The rotor-shaft assembly includes a shaft (49) with an integral turbine wheel (12) at one end and a bearing system (36) which is mounted on the shaft (49) and which is positioned within bearing bores (47) in the centre housing (24) in its assembled state. The bearings (36) are axially aligned on the shaft (49) by means of a shoulder (48), a spacer (50) and by a thrust bearing (45).

FIG: 2

Croydon Printing Company Ltd.

## ROTOR SHAFT ASSEMBLY FOR A TURBOCHARGER

## AND METHOD OF ASSEMBLY.

The present invention relates to the rotor shaft assembly of a turbocharger. The invention also relates to a method of retrofitting used turbochargers with a rotor-shaft assembly.

Typically, the rotating shaft in a turbocharger is capable of being driven at relatively high rotational speeds, such as speeds of the order of 120,000 RPM. Such rotational speeds require the use of precision bearing components together with an effective system of lubrication in order to reduce wear and the creation of noise.

Generally, journal bearings are retained within what is commonly called the centre housing of the turbocharger. The centre housing forms generally two bearing bosses which define bearing bores therein. These bearing bores are sized to accommodate the journal bearings. Adjacent to each bore are two annular grooves which are sized to accommodate a retaining ring in each, thereby locating the bearings with the centre housing.

During use, the bearings tend to wear the surfaces which define the bearing bore. After a certain amount of use, the turbocharger is returned to be rebuilt with bearings having an increased outer diameter in order to reduce radial shaft motion and noise created by worn bearings. During assembly of the turbocharger centre housing rotating assembly, the assembler must take care to ensure that the retaining rings are securely in place in order to locate the bearings. This seemingly simple task is made difficult by the lack of space in which to work. The placement of the retaining rings must be accomplished by sence of touch, and checked with a long pointed steel awl to insure that the retaining ring is properly seated. It is extremely difficult for the assembler to view the fitting of the retaining rings. In addition, the insertion of the shaft can result in some damage to the journal bearing bores.

Frequently, by the second time the turbocharger is rebuilt, the bearings may have worn the surface between the retaining ring grooves down to the point where the depth of the retaining ring groove is such that they can no longer perform their intended purpose. At this time it had been customary to throw away the centre housing because of the prohibitive cost of re-machining the retaining ring grooves in the bearing bosses.

It is an object of the present invention to overcome the prohibitive cost of remachining the centre housing without the need to discard the centre housing by utilizing an assembly which retains and locates the journal bearings on the shaft.

It is another object of this invention to provide a bearing structure which is located and axially aligned on the shaft

It is a further object of the invention to provide an easier and more accurate method of assembling and/ or rebuilding a turbocharger.

According to the invention, there is provided a rotor-shaft assembly for a turbocharger which comprises a shaft including a rotor coaxially mounted thereon, and bearing means for rotatably supporting the rotor shaft, characterised in that the bearing means are axially located directly with respect to the shaft. Thus, the bearing means may be rotatably secured on the shaft.

The bearing means may comprise at least one bearing, for example two. Preferably the baring means comprise a first and a second generally cylindrically shaped journal bearing, each having an inner diameter giving a relatively close fit about the shaft.

The bearings may be separated by means of a spacer or two retaining rings. Such a spacer may comprise a generally cylindrical member having an inner diameter slightly larger than the shaft diameter.

The bearing nearest to the rotor end of the shaft may be axially located by a spacer or by a shoulder formed on the shaft or by a retaining ring. The bearing furthest from the rotor end may be axially located by a thrust bearing or by retaining ring.

Preferably, however, a shoulder is formed on the shaft to locate the nearest bearing axially, a spacer is used to separate the two bearings, and the furthest bearing is located axially by a thrust bearing on the shaft.

Where one or more retaining rings are used to locate the bearings these are preferably each located in an annular groove in the shaft each located at a predetermined position. Preferably, any such grooves are formed in raised lands formed on the shaft.

According to another aspect of the invention, there is provided a rotor-shaft assembly comprising a rotor, and a shaft coaxially mounted on the rotor, the shaft including at least one bearing retaining ring groove. Preferably, there are a pair of grooves for locating journal bearing means, for example one pair of grooves, each arranged to receive two bearing retaining rings.

The invention also extends to a turbocharger incorporating a rotor-shaft assembly as described above.

In one preferred embodiment, the invention may provide a turbocharger comprising: a centre housing having a shaft bore therethrough; a rotor-shaft assembly including bearing means for rotatably supporting the shaft within the centre housing, the bearing means being axially located directly with respect to the shaft; a turbine housing enclosing the rotor and mounted on the centre housing; a compressor impeller mounted on the shaft opposite the rotor; a thrust bearing for preventing axial excursion of the shaft relative to the centre housing; and a compressor housing mounted on the centre housing enclosing the compressor impeller.

According to another aspect of the invention, there is provided a method of assembling a turbocharger comprising the steps of affixing a turbine wheel to one end of a shaft, rotatably mounting a bearing system on the shaft; inserting the shaft free end through a centre housing; mounting a thrust bearing on the shaft; securing a thrust collar in the centre housing; locating a turbine housing about the turbine wheel attaching a compressor impeller to the free end of the shaft; and locating a compressor housing about the compressor impeller characterised in that the bearing system is axially located directly with respect to the shaft.

Such a method may include the further step of positioning a turbine end heat shield with a central opening therein adjacent the centre housing prior to insertion of the shaft.

Preferably the step of rotatably mounting the bearing system on the shaft comprises the steps of: sliding a first journal bearing onto the shaft sliding a spacer onto the shaft; and sliding a second journal bearing onto the shaft such that the first journal bearing is adjacent a shoulder and the first and second journal bearings are separated by the spacer. The method preferably includes securing a bearing reataining ring onto the shaft adjacent the second journal bearing opposite the spacer.

In an alternative preferred method, the step of rotatably mounting a bearing system onto the shaft comprises the steps of ; securing a first journal bearing between two retaining rings on the shaft, and securing a second journal bearing between the two retaining rings on the shaft.

According to another aspect of the invention, there is provided a method of rebuilding the bearing system of a turbocharger having a centre housing defining a shaft bore and bearing bosses therein, comprising the steps of: enlarging the shaft bore; assembling a bearing system onto a shaft having a turbine wheel coaxially attached at one end; inserting the other end of the shaft into the shaft bore; fitting a thrust bearing assembly onto the inserted end of the shaft; affixing a compressor impeller onto the inserted end of the shaft;locating a turbine housing about the turbine wheel; and locating a compressor housing about the compressor impeller; characterised in that the bearing system is axially located directly with respect to the shaft.

According to another aspect of the invention, there is provided a rotor shaft assembly comprising a rotor and a rotor shaft coaxially mounted on the rotor, the shaft including a shoulder for axial location of bearing means.

The invention may be carried into practice in various ways and some embodiments will now be described by way of example with reference to the accompanying drawings, in which:-

Figure 1 is a cross-section view of a prior art turbocharger as originally fitted with bearings, retained in the centre housing;

Figure 2 is a cross-sectional view of a turbocharger in accordance with the present invention;

Figure 3 is an enlarged view of a shaft assembly according to a preferred embodiment of the inventon as shown in Figure 2.

Figures 4, 5, and 6 are views similar to Figure 4, each showing an alternative embodiment of the invention.

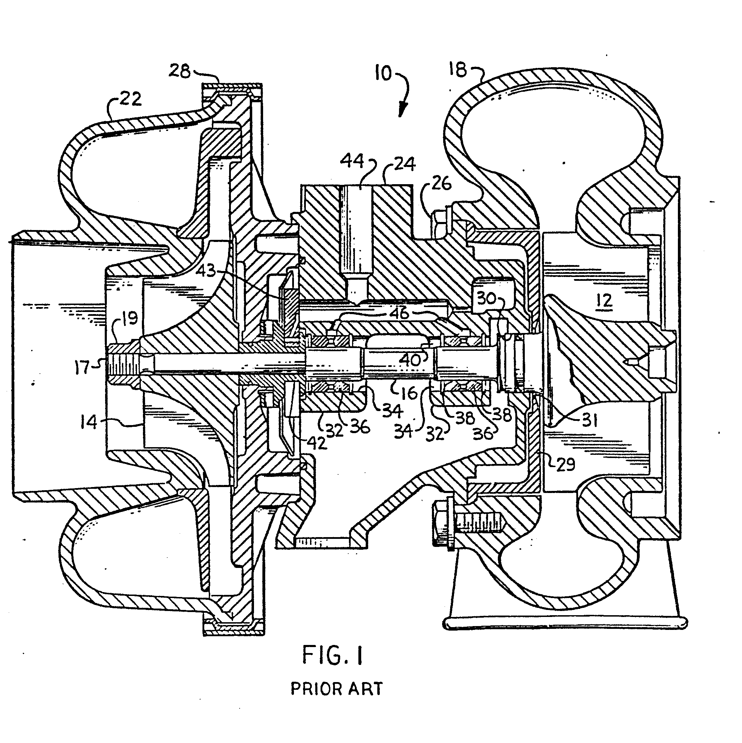

A turbocharger is shown in Figure 1 and generally comprises a turbine wheel 12 and a compressor impeller 14 mounted on opposite ends of a common shaft 16. The shaft 16 includes a threaded end 17 to which the impeller 14 is secured by a nut 19. The turbine wheel 12 is disposed within a burbine housing 18 which includes an inlet (not shown) for receiving exhaust gases from the engine. The turbine housing 18 guides the engine exhaust gases over the turbine wheel 12 where the gas expands and rotatably drives the turbine wheel. This driving of the turbine wheel 12 simultaneously rotatably drives the compressor impeller 14 which is carried within a compressor housing 22. The compressor impeller 14 and the housing 22 function to draw in and compress ambient air to supply to the intake of the engine by a suitably conduit.

The turbine housing 18 and the compressor housing 22 are mounted upon an intermediate centre housing 24 by bolts 26 or by clamps 28 or by some equivalent means. The centre housing 24 includes a central shaft bore 30 and a pair of bearing bosses 32 which are axially spaced from one another. The bearing bosses 32 form bearing bores 34 which receive suitable journal bearings 36 for rotatably receiving and supporting the shaft 16. Within each bearing bore 34 two annular grooves 38 are formed which are spaced axially apart and are sized to receive retaining rings 40 in order to secure the journal bearing 36 axially therebetween. Therefore, the bearings 36 are axially located directly to the centre housing 24 via the retaining rings 40. A thrust bearing 42 is also carried about the shaft 16 and cooperates with a thrust collar 43 for preventing axial movement of the shaft 16. The thrust bearing 42 and thrust collar 43 also cooperates to locate axially the shaft 16 directly to the centre housing 24. Hence, the bearings and shaft are axially located indirectly to each other. A turbine heat shield 29 having a central opening 31 is positioned between the centre housing 24 and the turbine housing 18.

Lubricant such as engine oil or the like is supplied via the centre housing 24 to the journal bearings 36 and to the thrust bearing assembly 42. A lubricant inlet port 44 is formed in the centre housing 24 and is adapted for connection to a suitable source of lubricant such as filtered engine oil. The port 44 communicates with a network of internal supply passages 46 which are formed in the centre housing 24 to direct the lubricant to the appropriate bearings. In this manner, excessive bearing wear and heating is avoided to prolong the operating life of the turbocharger. The lubricant circulated to the bearings is collected in a sump or drain for passage to filtering, cooling and recirculation engagement, all in a well-known manner.

In spite of the lubrication and the relative softness of the bearing material in comparison to the centre housing material,wear within the bearing bores 34 does occur. This wear occurs between the two retaining ring grooves 38 such that the diameter of the bearing bore 34 between the retaining rings is ever increasing.

In normal machining operation, the retaining ring grooves 38 are machined to a depth of approximately 0.016" (0.41mm) or in other words they have a mean diameter 0.032" (0.81mm) greater than the bearing bores 34. After normal turbocharger operation, the journal bearings 36 cause an increase in bearing bore diameter which in turn results in radial motion of the bearings and shaft Therefore, when the turbocharger is being rebuilt for the first time, the bearing bore diameter is enlarged by 0.010" (0.25mm). The depth of the retaining ring grooves is reduced to approximately 0.011" (0.28mm) but they retain their usefulness. Thereafter, the turbocharger is fitted with bearings of increased diameter and reassembled.

When a turbocharger is returned for repair and overhauled a second time, bearing wear has now enlarged the bearing bore to the point where it is approximately of equal diameter to that of the retaining ring grooves 38. Hence, the groove has effectively been worn away. At this time, the retaining ring groove can be remachined, however, the cost of such an operation would be prohibitive. In the past the centre housing has been scraped rather than incurring the cost of remachining the grooves in the bearing bosses.

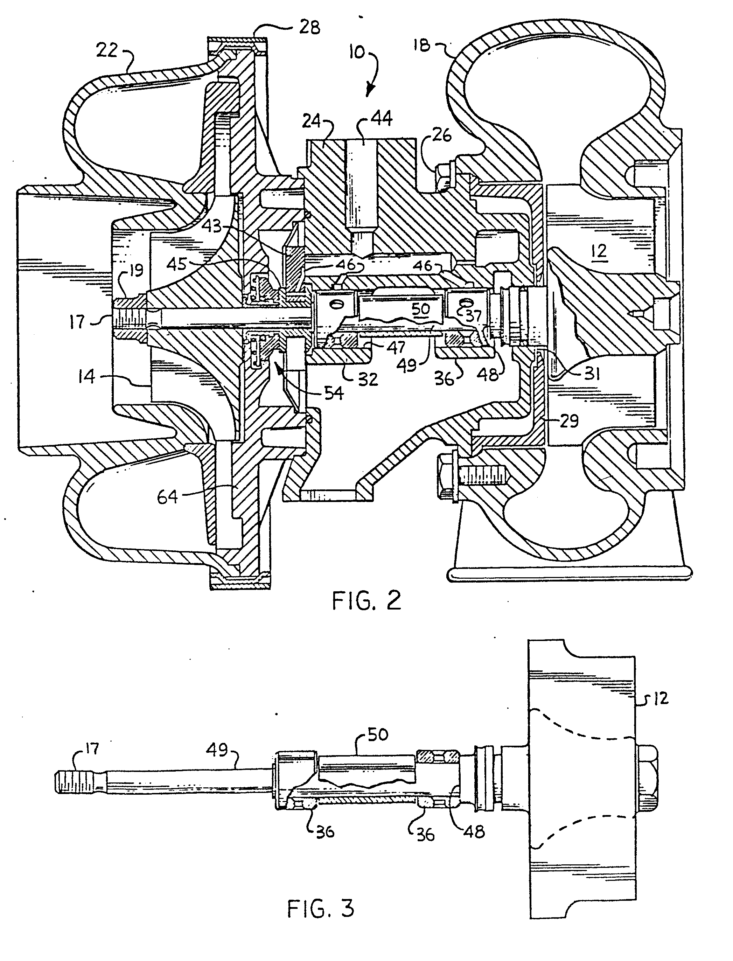

A first embodiment of the invention is shown in Figures 2 and 3.

The shaft bore within the centre housing is enlarged by an amount which effectively removes the original retaining ring grooves 38. Normally this would represent an increase in shaft bore diameter of the order of approximately 0.020" (0.51mm). While this increase in bore diameter does not eliminate all traces of the retaining ring groove 38, any trace remaining will not affect performance. Enlarging the bore by an amount greater than is necessary for effective operation only results in the need for a greater bearing size and a corresponding increase in expense. The boring operation is relatively inexpensive in comparison with the hook tool machining operations necessary to cut new retaining ring grooves in the bearing bosses. As can readily be seen, the enlarged bearing bore 47 necessitates a new means of axially locating the bearings within the centre housing 24, since the original retaining ring grooves 38 have been eliminated.

As shown, a shaft 49 is formed with an integral shoulder 48 thereon. The shaft is either formed integral with a turbine wheel or is inertia or friction welded coaxially to the turbine wheel afterwards. A first journal bearing 36 is slid over the threaded end of the shaft and rests adjacent the shoulder 48. Because the bearing bore 34 has been enlarged it is necessary to use a journal bearing having an outside diameter which is larger than the outside diameter of the bearings as originally supplied or as used during the first rebuild.

The journal bearing 36 is generally cylindrically shaped and formed from a suitable material such as bronze or the like. The bearing 36 has an inner diameter which gives a relatively close fit over the shaft 49 for rotatably receiving and supporting the shaft. The bearing 36 further includes at least one radial passage 37 so as to allow ample lubricant flow to the inner diameter of the bearing. The radial passages 37 are axially aligned with the internal lubrication passage 46 in the assembled state.

A generally cylindrically shaped aluminium alloy spacer 50 is then slid onto the shaft 49, followed by a second journal bearing 36. It can readily be seen that the dimensions of the shoulder 48, the bearings 36, the spacer 50 and the thrust bearing 42 can be changed in order to accommodate any particular centre housing 24 which might be being rebuilt. In addition, it can readily be seen that the bearings 36 are axially located directly to the shaft 49 and are axially located only indirectly to the centre housing 24.

The present invention can also accommodate a change in the type of thrust collar and sealing arrangement used at the compressor end of the centre housing. As can be seen in Figures 1 and 2, the dynamic thrust bearing 42, having an integral bearing spacer portion (Figure 1) has been replaced by a thrust bearing 45 which cooperates with a face seal system 54 (Figure 2). The face seal 54 is described in detail in U.S. Patent No. 4,420,160 which is hereby incorporated by reference. In this arrangement, the thrust bearing and thrust collar axially locate the shaft directly with respect to the centre housing.

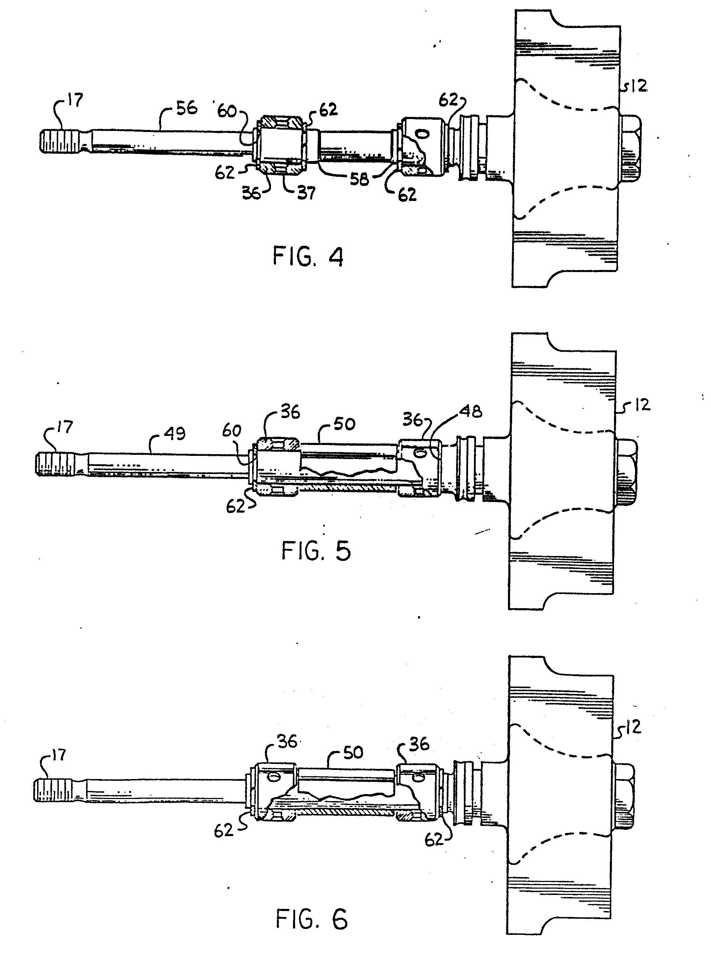

Alternative embodiments of the present invention are shown in Figures 4,5 and 6.

In Figure 4, the shaft 56 is formed with two bearing lands 58. Within each bearing land 58 two bearing retaining ring grooves 60 are machined or otherwise formed.In these grooves 60 four bearing retaining rings 62 are placed in order to locate the bearings 36 axially. In this case, the spacer 50 is not required.

The embodiment shown in Figure 5 is identical to that of Figures 2 and 3 except that the shaft 49 is formed with a single retaining ring groove 60 at a point adjacent the thrust bearing 42. A retaining ring 62 placed in the groove 60 axially locates and secures the two journal bearings 36 and the spacer 50 relative to the shaft 49. Additionally, a further spacer (not shown) could be used in place of the shoulder 48 in order to salvage existing rotor-shaft assemblies.

The embodiment shown in Figure 6 is similar to that shown in Figure 4, and differs only in that the two retaining rings 62 located between the two bearings 36 have been removed and replaced by the spacer 50.

In each of the embodiments shown, the bearing members have been axially located on the shaft. Additionally, in Figures 4, 5 and 6 the bearing members have been secured on the shaft 49 by the retaining rings 62. Therefore, during reassembly of the centre housing rotating assembly, the assembler need not be concerned with axial location of the bearings with respect to the housing. Furthermore, all previous difficulties associated with ensuring that the retaining rings have been properly located are eliminated, since the assembler is no longer working blindly as in those embodiments which use retaining rings mounted within the centre housing bearing bosses.

The method of assembly of the preferred embodiment of the invention is accomplished by preforming a shoulder portion 48 on a shaft having an integral turbine wheel. Thereafter, a first journal bearing 36 is slid onto the shaft 49 followed by the spacer 50 and the second journal bearing. This assembly is then placed within the centre housing shaft bore 30 through the central opening 31 in the heat shield 29 at the turbine end of the turbocharger. The thrust bearing 42 or 45 and thrust collar 43, preassembled with a compressor backplate 64, is fitted over the threaded end of the shaft 49. The compressor backplate 64 is then bolted to (or secured by another method) to the centre housing 24. The thrust bearing system 42,43 (or 45, 43) therefore locates and retains the bearing system within the centre housing 24.

The compressor impeller 14 is then slid over the threaded end 17 of the shaft and secured by a nut 19.

CLAIMS:

1. A rotor-shaft assembly for a turbocharger which comprises a shaft (49) including a rotor (12) coaxially mounted thereon, and bearing means (36) are axially located directly with respect to the shaft (49).

2. A rotor-shaft assembly as claimed in Claim 1 characterised in that bearing means comprise a first and a second generally cylindrically shaped journal bearing (36) each having an inner diameter giving a relatively close fit about the shaft (49).

3. A rotor shaft assembly as claimed in Claim 2 characterised in that the two bearings are separated by means of a spacer (50) or two retaining rings (62).

4. A rotor shaft assembly as claimed in Claim 2 or Claim 3 characterised in that the bearing (36) nearest the rotor end shaft (49) is axially located by a spacer or by a shoulder (48) formed on the shaft (49) or by a retaining ring (62).

5. A rotor shaft assembly as claimed in any of Claims 2 to 4 characterised in that the bearing (36) furthest from the rotor end of the shaft (49) is axially located by a thrust bearing (45) or by retaining ring (62).

6. A rotor shaft assembly as claimed in any of Claims 3 to 6 characterised in that any retaining ring (62) is located in an annular groove (60) in the shaft (49) each located at a predetermined position.

7.    A rotor-shaft as claimed in Claim 6 characterised in that the shaft (49) has at least one raised land and any retaining ring groove (60) is formed in the land or lands (58).

8.    A method of assembling a turbocharger comprising the steps of: affixing a turbine wheel (12) to one end of a shaft (49) rotatably mounting a bearing system (36) on the shaft (49); inserting the shaft free end through a centre housing (24);mounting a thrust bearing (45) on the shaft (49);  securing a thrust collar in the centre housing (24); locating a turbine housing (18) about the turbine wheel (12); attaching a compressor impeller (14) to the free end of the shaft (49); and locating a compressor housing (22) about the compressor impeller(14).

9.    A method as claimed in Claim 8 characterised in that the step of rotatably mounting the bearing system (36) on the shaft (49)  comprises the steps of: sliding a first journal bearing (36) onto the shaft (49); sliding a spacer (50) onto the shaft (49); and, sliding a second journal bearing (36) onto the shaft (49) such that the first journal bearing (36) is adjacent a shoulder (48) and the first and second journal bearings (36) are separated by the spacer (50).

10.   A method of rebuilding the bearing system of a turbocharger having a centre housing (24) defining a shaft bore and bearing bosses (32) therein, comprising the steps of: enlarging the shaft bore (47); assembling a bearing system onto a shaft (49) having a turbine wheel (12) coaxially attached at one end; inserting the other end of the shaft (49) into the shaft bore (47); fitting a thrust bearing assembly (45) onto the inserted end of the shaft (49); affixing a compressor impeller (14) onto the inserted end of the shaft (49); locating a turbine housing (18) about the turbine wheel (12); and locating a compressor housing (22) about the compressor impeller (14); characterised in that the bearing system (36) is axially located directly with respect to the shaft (49).

0185515

FIG. I

PRIOR ART

0185515

FIG. 2

FIG. 3

0185515

FIG. 4

FIG. 5

FIG. 6

0185515

**European Patent Office**

**EUROPEAN SEARCH REPORT**

Application number

EP 85 30 9040

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 358 253 (OKANO)<br><br>* Column 1, lines 1-34; column 1, line 64 - column 2, line 36; column 3, lines 25-45; column 4, lines 3-47; column 5, line 52 - column 6, line 16; figures 1,2 * | 1-5,8, 9 | F 01 D 25/16<br>F 16 C 17/18 |
| Y | --- | 10 | |
| Y | GB-A-2 114 684 (YOSHIOKA)<br>* Whole document *<br>--- | 10 | |
| A | DE-A-2 061 393 (GROHROCK)<br><br>* Figure 1 *<br>--- | 1-4,8, 9 | |
| A | EP-A-0 021 738 (ARORA)<br><br>* Whole document *<br>--- | 1-3,8, 9 | **TECHNICAL FIELDS SEARCHED (Int. Cl.4)**<br><br>F 01 D |
| A | GB-A-1 092 558 (HASA)<br>* Whole document *<br><br>----- | 1-3,8 | |

The present search report has been drawn up for all claims

| Place of search | Date of completion of the search | Examiner |
|---|---|---|
| THE HAGUE | 17-02-1986 | IVERUS D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82